# EUROPÄISCHE PATENTSCHRIFT

(11) **EP 2 715 834 B1**
(45) Veröffentlichungstag und Bekanntmachung des Hinweises auf die Patenterteilung: **04.03.2015**
(21) Anmeldenummer: 12719280.5
(22) Anmeldetag: 04.05.2012
(51) Int. Cl.: B60L 11/18, H01M 2/02, H01M 2/10, H01M 10/04

(54) **ENERGIESPEICHERMODUL AUS MEHREREN INSBESONDERE PRISMATISCHEN SPEICHERZELLEN UND VERFAHREN ZUR HERSTELLUNG EINES ENERGIESPEICHERMODULS**
ENERGY STORAGE MODULE COMPRISING A PLURALITY OF IN PARTICULAR PRISMATIC STORAGE CELLS AND METHOD FOR PRODUCING AN ENERGY STORAGE MODULE
MODULE ACCUMULATEUR D'ÉNERGIE CONSTITUÉ DE PLUSIEURS ÉLÉMENTS D'ACCUMULATEUR NOTAMMENT EN FORME DE PRISME ET PROCÉDÉ DE PRODUCTION D'UN MODULE ACCUMULATEUR D'ÉNERGIE

(30) Priorität: 27.05.2011 DE 102011076583
(43) Veröffentlichungstag der Anmeldung: 09.04.2014
(60) Teilanmeldung: 14197262.0
(73) Patentinhaber: Bayerische Motoren Werke Aktiengesellschaft, 80809 München (DE)
(72) Erfinder: GOESMANN, Hubertus, 89564 Nattheim-Auernheim (DE); LUSTIG, Robert, 81679 München (DE); VIETZE, Eva, 80805 München (DE); ZÜGNER, Stephan, 81379 München (DE); THURMEIER, Markus, 84166 Adlkofen (DE)
(86) Internationale Anmeldenummer: PCT/EP2012/001908
(87) Internationale Veröffentlichungsnummer: WO 2012/163459

(56) Entgegenhaltungen:
- WO-A1-2011/054544
- DE-A1-102006 048 291
- DE-A1-102008 059 964
- DE-A1-102008 059 966
- DE-A1-102009 028 920
- GB-A- 1 526 279
- JP-A- 2007 294 407
- JP-A- 2009 048 965
- US-A- 4 100 333
- US-A1- 2005 058 891
- US-A1- 2008 280 194
- US-A1- 2010 136 405
- US-A1- 2010 190 049

## Beschreibung

Die Erfindung betrifft ein Energiespeichermodul für eine Vorrichtung zur Spannungsversorgung, insbesondere eines Kraftfahrzeugs, aus mehreren insbesondere prismatischen Speicherzellen, die zumindest in einer Reihe gestapelt, hintereinander angeordnet und zwischen mindestens zwei Endplatten über mindestens einen Zuganker oder eine Wickelung verspannt sind. Die Erfindung betrifft ferner ein Verfahren zur Herstellung eines Energiespeichermoduls.

In einer üblicherweise als Batterie bezeichneten Vorrichtung zur Spannungsversorgung eines Kraftfahrzeugs kommt meist eine Mehrzahl an Energiespeichermodulen zum Antrieb des Fahrzeugs, beispielsweise von Elektrofahrzeugen oder Hybridfahrzeugen, zum Einsatz. Ein jeweiliges Energiespeichermodul besteht dabei typischerweise aus mehreren gestapelten prismatischen Speicherzellen. Die einzelnen Speicherzellen enthalten elektrochemische Zellen der Batterie. Der Stapel aus den einzelnen Speicherzellen wird zumeist über eine mechanische Endplatte und Zuganker zu dem Energiespeichermodul verspannt. Die Endplatten und Zuganker dienen neben der mechanischen Fixierung der Module zueinander insbesondere dazu, einer Verformung durch Änderung bzw. Erhöhung des Gasinnendrucks während des Betriebs der im Inneren der Module angeordneten elektrochemischen Zellen des Speichermoduls, entgegenzuwirken.

Die Endplatten und Zuganker der herkömmlichen Energiespeichermodule werden üblicherweise durch Strangpressverfahren aus Stahl oder Aluminium hergestellt. Die Herstellung solcher so genannter Strangpressprofile, ist dabei mit einem hohen fertigungstechnischen Aufwand und daraus resultierenden hohen Kosten, verbunden. Strangpressprofile für Energiespeichermodule lassen sich daher im großtechnischen Maßstab nicht kostengünstig produzieren. Herkömmliche Strangpressprofile für Energiespeichermodule haben ferner den Nachteil, dass sie aufgrund der Werkstoffeigenschaften des verwendeten Werkstoffes ein hohes Gewicht aufweisen, was sich nachteilig auf das Gesamtgewicht des Kraftfahrzeugs auswirkt. Darüber hinaus sind die das Strangprofil bildenden Materialien, also in der Regel Stahl oder Aluminium, elektrisch leitend, so dass zwischen den einzelnen Speicherzellen und der Spannvorrichtung eine isolierende Schicht erforderlich ist, um elektrische Kopplungen zwischen den Speicherzellen zu verhindern. Das Vorsehen solcher isolierender Schichten ist kostenintensiv und erhöht den Fertigungsaufwand des Energiespeichermoduls und damit die Kosten für die Produktion desselben.

Das Dokument WO 2011/054544 A1 offenbart ein aus dem Stand der Technik bekanntes Energiespeichermodul.

Es ist Aufgabe der vorliegenden Erfindung, ein kostengünstiges Energiespeichermodul für eine Vorrichtung zur Spannungsversorgung bereitzustellen, das auf einfache Weise herstellbar ist und neben einer sehr guten Stabilität ein geringes Eigengewicht aufweist. Ferner ist es Aufgabe der vorliegenden Erfindung, ein Verfahren zur Herstellung eines Energiespeichermoduls bereitzustellen, das eines geringen fertigungstechnischen Aufwandes bedarf und das zudem eine einfache und kostengünstige Fertigung des Energiespeichermoduls erlaubt.

Die Aufgabe wird gelöst durch die Merkmalskombinationen der unabhängigen Ansprüche. Die abhängigen Ansprüche zeigen vorteilhafte Ausgestaltungen der Erfindung.

Somit wird die Aufgabe gelöst durch ein Energiespeichermodul für eine Vorrichtung zur Spannungsversorgung, insbesondere eines Kraftfahrzeugs, umfassend mehrere, insbesondere prismatische Speicherzellen, die mindestens in einer Reihe gestapelt, hintereinander angeordnet und zwischen mindestens zwei Endplatten (auch Druckplatten genannt) über mindestens einen Zuganker verspannt sind. Zumindest eine der Endplatten weist dabei eine Schichtstruktur aus mindestens drei Schichten auf, wobei alle Schichten der Endplatte und der Zuganker aus einem Faserverbundmaterial bestelen. Üblicherweise ist jeweils eine Endplatte an der jeweiligen Stirnseite der endständigen gestapelten Zellen angebracht, so dass das Energiespeichermodul zwei Endplatten umfasst. Eine Endplatte kann allerdings auch aus mehreren Einzelplatten bestehen, wobei dann erfindungsgemäß wenigstens eine dieser Einzelplatten eine Schichtstruktur aus mindestens drei Schichten aufweist, wobei alle Schichten der Endplatte und der Zuganker aus einem Faserverbundmaterial bestehen.

Weist die Endplatte des erfindungsgemäßen Energiespeichermoduls eine Schichtstruktur auf, so umfasst diese Schichtstruktur mindestens drei Schichten, wodurch eine ausreichende Stabilität der Endplatte gegenüber Druckverformung gewährleistet wird. Weitere Schichten können vorgesehen sein. Die Schichten können aus verschiedenen Materialien gebildet sein, die Metalle oder Legierungen, wie beispielsweise Stahl und auch Kunststoffe umfassen, wobei die jeweiligen Schichten alle oder teilweise aus demselben Material oder jeweils aus unterschiedlichen Materialien gebildet sein können. Geeignete Materialien können miteinander, ggf. unter Zuhilfenahme von Befestigungselementen oder adhäsiven Komponenten, kombiniert werden. Eine solche Schichtstruktur weist gegenüber herkömmlichen Strangpressprofilen den Vorteil auf, dass die Stabilität der Endplatten entsprechend den Anforderungen gezielt eingestellt werden kann und darüber hinaus eine effektive Gewichtsreduktion des Eigengewichts der Endplatte und damit des Energiespeichermoduls, erzielt wird. Auch ist der Fertigungsaufwand einer solchen Endplatte gering, was nicht nur die technischen und betriebswirtschaftlichen Anforderungen an die Produktion des erfindungsgemäßen Energiespeichermoduls, sondern auch die Fertigungskosten desselben und somit die Kosten des Energiespeichermoduls, senkt. Im Falle einer vorgesehenen Schichtstruktur des erfindungsgemäßen Energiespeichermoduls kann die Verspannung auch über herkömmliche Zugelemente, die insbesondere in Form von Zugankern ausgebildet sind, erfolgen.

Die Endplatten des erfindungsgemäßen Energiespeichermoduls können über mindestens ein Zugelement, welches erfindungsgemäß als Zuganker ausgebildet ist, verspannt sein. Die Anzahl und Form der Zugelemente nchtet sich nach deren individueller Gestaltung. Je nach erforderlicher Stabilität kann ein bzw. können beispielsweise mehrere Zuganker vorgesehen werden, die die an den äußeren Speicherzellen stirnseitig angebrachten Endplatten miteinander verbinden (verspannen). Ein solcher Zuganker weist eine Form auf, die eine dauerhafte Verbindung und Verspannung des Speicherzellenmoduls umfassend Speicherzellen und Endplatten, erlaubt.

Erfindungsgemäß ist das Zugelement als Zuganker ausgebildet, wobei der Zuganker aus einem Faserverbundmaterial gebildet ist. Faserverbundmaterialien sind aus dem Stand der Technik bekannt. Sie umfassen in der Regel ein Matrixmaterial und entsprechende Fasern, wobei die Fasern in dem Matrixmaterial überwiegend homogen verteilt vorliegen, was zur Stabilität des Faserverbundmaterials wesentlich beiträgt. Die Verwendung eines Zugankers aus Faserverbundmaterial reduziert aufgrund des gegenüber herkömmlichen, metallischen Werkstoffen geringeren Eigengewichts des Faserverbundmaterials, das Gewicht des Energiespeichermoduls und erhöht damit die Eignung des erfindungsgemäßen Energiespeichermoduls für beispielsweise in Leichtbauweise hergestellte Kraftfahrzeuge.

Ist kein Zuganker zur Verspannung der Speicherzellen und der Endplatten vorgesehen, so kann eine solche Verspannung nicht erfindungsgemäß durch eine Wickelung erfolgen. Eine Wickelung im Sinne der Erfindung ist eine Art Umhüllung des Speicherzellenmoduls mit geeigneten Materialien, die eine stabile Verbindung zwischen dem Speicherzellenstapel und den Endplatten bewirken, so dass das Energiespeichermodul die notwendigen Stabilitätsanforderungen erfüllt, d.h. der Verformung aufgrund der Druckänderungen im Inneren der Speicherzellen bei Betrieb derselben, entgegenwirkt. Solche Wickelungen können beispielsweise mit Metallbändern, Fasermaterialien oder Drähten ausgeführt werden.

Übliche weitere Bauelemente, wie beispielsweise elektrische Anschlüsse und Isolatoren zwischen den Zellen und/oder den Speicherzellen und dem Verspannelement, können das erfindungsgemäße Energiespelchermodul komplettieren.

In vorteilhafter Ausführung ist vorgesehen, dass beide Endplatten des Energiespeichermoduls eine Schichtstruktur aus mindestens drei Schichten aufweisen. Hierdurch erhöht sich die Gewichtsreduktion des erfindungsgemäßen Energiespeichermoduls um ein Mehrfaches. Auch werden dadurch der Fertigungsaufwand und damit die Kosten des erfindungsgemäßen Energiespeichermoduls reduziert.

In einer weiteren bevorzugten Ausführung ist vorgesehen, dass die Schichtstruktur der Endplatte eine Sandwichstruktur ist, die eine erste und eine zweite äußere Schicht und mindestens eine innere Schicht umfasst, wobei die erste und zweite äußere Schicht die innere Schicht umgeben und wobei mindestens eine äußere Schicht oder mindestens eine innere Schicht aus einem Faserverbundmaterial besteht. Faserverbundmaterialien sind, wie bereits ausgeführt, aus dem Stand der Technik bekannt. Durch Verwendung von Faserverbundmaterialien in mindestens einer Schicht der mindestens drei-schichtigen Endplatte des erfindungsgemäßen Energiespeichermoduls, lässt sich bei gleichbleibend guter oder sogar besserer Stabilität der Endplatte das Gewicht der Endplatte und damit dasjenige des erfindungsgemäßen Energiespelchermoduls, aufgrund des geringen Eigengewichts des Faserverbundmaterials, reduzieren. Dies ist besonders vorteilhaft, sofern das erfindungsgemäße Energiespeichermodul für ein Kraftfahrzeug in Leichtbauweise vorgesehen ist.

Vorzugsweise ist beispielsweise die innere Schicht aus einem Fasern enthaltenden Spritzgußmaterial, und insbesondere einem thermoplastischen Spritzgußmaterial, gebildet, wobei die Fasern vorzugsweise Kurzfasem sind, die in dem Spritzgußmaterial homogen verteilt sind. Eine homogene Verteilung von Fasern im Sinne der Erfindung ist auch eine diffuse Verteilung, bei der die Fasern in alle Richtungen, also anisotrop, angeordnet sind, wobei aber die Faserdichte in allen Bereichen der jeweiligen Schicht im Wesentlichen gleich ist. Die jeweiligen äußeren Schichten können dabei aus üblichen Metallen, wie beispielsweise Aluminium, gebildet sein. Die Schichten werden auf herkömmliche Art und Weise, ggf. unter Zuhilfenahme von Befestigungsmitteln, miteinander verbunden. Die Verwendung einer inneren Schicht aus dem oben benannten Faserverbundmaterial reduziert bei ausreichender Stabilität, das Eigengewicht der Endplatte bedeutend und trägt damit zur Gewichtsreduktion des erfindungsgemäßen Energiespeichermoduls bei.

Ferner ist vorzugsweise vorgesehen, dass alle Schichten, also beide äußere Schichten und die innere Schicht, sowie ggf. weitere innere Schichten der Endplatte des erfindungsgemäßen Energiespeichermoduls aus einem Faserverbundmaterial bestehen. Dies verringert weiterhin das Gewicht des Energiespeichermoduls und vereinfacht zudem die Fertigung der Endplatte, da sich Schichten aus Faserverbundmaterialien besonders einfach und gut, ohne großen technischen Aufwand, miteinander verbinden lassen, wodurch die Stabilität der Endplatte des erfindungsgemäßen Energiespeichermoduls deutlich erhöht wird. Dies gilt überwiegend sowohl für gleiche Faserverbundmaterialien, wie auch für unterschiedliche Faserverbundmaterialien.

Bevorzugter Weise weist die erfindungsgemäße Endplatte eine Drei-Schicht-Struktur auf, in der die jeweils äußeren Schichten durch ein Faserverbundmaterial gebildet sind, das unidirektionale Langfasern in einem vorzugsweise thermoplastischen Matrixmaterial aufweist, wobei die von den äußeren Schichten umgebene innere Schicht durch in einem vorzugsweise thermoplastischen Spritzgußmaterial eingebettete Kurzfasern, gebildet ist. Die Anwesenheit von Kurzfasem ist nicht zwingend, sie erhöht aber die Stabilität der inneren Schicht durch die diffuse Anordnung der Kurzfasem. Weiter vorzugsweise weisen alle drei Schichten dasselbe Matrixmaterial und insbesondere dasselbe thermoplastische Matrixmaterial auf. Dies vereinfacht die Herstellung der Schichtstruktur, also das Laminieren der Schichten, und führt zu einer besonders guten Stabilität der Drei-Schicht-Struktur. Im Falle von unterschiedlichen Matrixmaterialien können die verschiedenen Schichten ggf. unter Zuhilfenahme von üblichen Befestigungsmitteln oder adhäsiven Materialien miteinander verbunden werden. Ist die innere Schicht aus einem Spritzgußmaterial gebildet, so kann dieses Schicht auch eine Eigenstruktur aufweisen, muss also nicht planar gebildet sein, sondern kann vorteilhafterweise auch eine Art Wellenstruktur aufweisen, die der Endplatte eine zusätzliche Stabilität gegenüber einwirkenden Deformationskräften verleiht.

Erfindungsgemäß ist vorgesehen, dass sowohl die Endplatten als auch der Zuganker aus einem Faserverbundmaterial bestehen. Dabei kann es sich bei dem Faserverbundmaterial der Endplatten und des Zugankers um jeweils dasselbe Material oder aber um unterschiedliche Materialien, vorzugsweise um dasselbe Faserverbundmaterial, handeln. Hierdurch wird weiterhin das Gewicht des Energiespeichermoduls effizient verringert und die Fertigung desselben vereinfacht, da sich aufgrund der Verwendung von Faserverbundmaterialien für sowohl Zuganker als auch Endplatten, diese leicht, ohne großen technischen Aufwand, dauerhaft und effizient miteinander verbinden lassen. Ferner kann aufgrund der Verwendung des Faserverbundmaterials in der Regel auf eine elektrische Isolierung der Speicherzellen und der Nahtstellen der Speicherzellen und des Zugankers verzichtet werden. Dies gilt insbesondere dann, wenn auch das Fasermaterial aus elektrisch nicht leitendem Material besteht.

Weiter vorteilhaft ist es, wenn die Wickelung ein die gestapelten Speicherzellen sowie die Endplatten zumindest teilweise umgebendes Zusatzelement sowie ein Faserverbundmaterial umfasst, wobei das Faserverbundmaterial das Zusatzelement zumindest teilweise umgibt. Wie bereits ausgeführt, ist eine Wickelung nicht erfindungsgemäß alternativ zur Verwendung eines Zugelement oder Zugankers vorgesehen. In dieser Ausführung ist um das Zellenmodul, umfassend gestapelte Speicherzellen und Endplatten, ein Zusatzelement angebracht, das das Zellenmodul zumindest teilweise umgibt. Dieses Zusatzelement bildet eine stabile Grundlage für das später zuzuführende Faserverbundmaterial, so dass das Faserverbundmaterial nicht zwischen die gestapelten Zellen gerät und ferner eine ausreichend stabile Verspannung des erfindungsgemäßen Energiespeichermoduls gewährleistet wird. Geeignete Zusatzelemente umfassen dabei beispielsweise ggf. strukturierte Metallplatten oder Metallbleche, die auch vielschichtig ausgeführt sein können, duromere oder thermoplastische Kunststoffprofile, wie beispielsweise duromere Wabenkerne oder thermoplastische Tiefziehprofile. Diese Zusatzelemente können das Zellenmodul vollständig, aber auch nur teilweise umgeben. Dies ist abhängig von der erforderlichen Stabilität und Größe des Energiespeichermoduls, also auch von dem im inneren der Speicherzellen während des Betriebs des Energiespeichermoduls entstehenden Drucks, und kann entsprechend des verwendeten Materials in geeigneter Größe und Form erfolgen. Ein teilweises Umgeben des Zellmoduls mit dem Zusatzelement reduziert hierbei die Kosten des Energiespeichermoduls. Weiter vorgesehen ist, dass das Zusatzelement zumindest teilweise mit einem Faserverbundmaterial umgeben ist. Dieses kann in Form einer Matte oder eines Bandes um das Zusatzelement und damit auch um das Zellenmodul gewunden bzw. gewickelt sein und ist mit einem Matrixmaterial versehen, das das Fasergebilde durchdringt und/oder umgibt, und somit zur ausreichenden Stabilität der Wickelung beiträgt. Vorzugsweise ist das Fasermaterial ein Faserstrang oder Faserband aus mehreren Einzelfasern, das vor dem Umwickeln des Zusatzelements in ein Bad getaucht wird, das das Matrixmaterial enthält. Ist das Matrixmaterial ein Duroplast, so wird das erfindungsgemäße Energiespeichermodul nach Fertigstellung der Wickelung gehärtet, wodurch der Duroplast seine finale Form und Stabilität erhält, wobei die Härtung des Duroplasten mittels üblicher Verfahren, wie beispielsweise Lichthärtung oder Wärmehärtung, erfolgt. Bei Verwendung eines thermoplastischen Materials wird dieses zur Bereitstellung des Tauchbades bis zu seinem Schmelzpunkt oder Erweichungspunkt erwärmt, wodurch es ausreichend erweicht und an dem durch das Bad gezogenen Faserband (oder Faserstrang) anhaftet. Die Aushärtung erfolgt dann durch Abkühlen des gewickelten Energiespeichermoduls.

Alternativ kann die Wickelung auch so erfolgen, dass ein bereits vorgewickeltes und mit Matrixmaterial versehenes Fasergebilde z.B. unter Wärmeeinwirkung, gedehnt und dem Energiespeichermodul oder einem vorgesehenen Zusatzelement, übergestülpt wird.

Vorteilhafterweise weist das Faserverbundmaterial für die Endplatte und/oder den Zuganker und/oder die Wicklung eine thermoplastische Matrix mit Fasern oder eine duromere Matrix mit Fasern auf. Derartige Faserverbundmaterialien sind in gewünschter Härte bzw. Elastizität gut verfügbar und zeichnen sich durch lediglich geringe Kosten und zudem isolierende Eigenschaften aus, wodurch in der Regel auf Isolierschichten zwischen den einzelnen Speicherzellen sowie den Speicherzellen und dem Zuganker verzichtet werden kann, was eine deutlich Vereinfachung der Herstellung und damit auch der Herstellkosten bedingt. Zudem weisen diese Materialien ein geringes Eigengewicht im Vergleich zu gängigen Strangpressprofilen auf und sind leicht mit herkömmlichen Mitteln, ohne großen technischen Aufwand, verarbeitbar, was die Produktionskosten des erfindungsgemäßen Energiespeichermoduls gering hält. Besonders bevorzugt zeichnet sich das Faserverbundmaterial durch eine thermoplastische Matrix mit Fasern aus, da thermoplastische Materialien, aufgrund ihrer Aufschmelzbarkeit, besonders leicht zu verarbeiten sind und dennoch eine ausreichende Stabilität bereitstellen. Ein aufgrund der geringen Kosten und guten Verfügbarkeit besonders bevorzugter Thermoplast ist Polypropylen (PP).

Gemäß einer weiteren vorteilhaften Ausführung ist vorgesehen, dass die Fasern des Verbundmaterials für die Endplatte und/oder des Zugankers und/oder der Wickelung ausgewählt sind aus Glasfasern, Kohlefasern, Mineralfasern, wie beispielsweise Basaltfasern, Pflanzenfasern, wie beispielsweise Cellulosefasern oder Sisalfasern, Keramikfasern wie beispielsweise Mullitfasern oder SiC-Fasern, Stahlfasern oder Kunststofffasern, wie beispielsweise Polypropylenfasern, Nylonfasern oder Aramidfasern oder Mischungen daraus. Die Fasern können je nach Anforderungsprofil ausgewählt werden. Insbesondere bevorzugt sind Glasfasern, da sich diese durch eine hohe Stabilität, gute Verfügbarkeit und elektrisch isolierende Eigenschaften auszeichnen. Zudem sind Glasfasern in den erforderlichen Stabilitätsgraden kostengünstig erhältlich. Dies senkt deutlich die Herstellkosten des erfindungsgemäßen Energiespeichermoduls bei sehr guter Stabilität desselben. Die Fasern können dabei als Langfasern oder Kurzfasem vorliegen, wobei Langfasern die Stabilität des Faserverbundwerkstoffes deutlich erhöhen. Ferner können die Fasern ungebunden, also als disperse Verteilung in dem Matrixmaterial vorliegen. Vorzugsweise sind die Fasern aber mindestens zu Faserbündeln oder aber sogar zu Fasermatten, Gewirken, Gestricken, Geweben, Gelegen und dergleichen verbunden, da dadurch die Stabilität des Faserverbundmaterials um ein Vielfaches erhöht wird.

Weiter vorteilhaft zeichnet sich das erfindungsgemäße Energiespeichermodul dadurch aus, dass die Fasern unidirektionale Fasern sind. Das bedeutet, dass die Fasern in dem Faserverbundmaterial in einer Vorzugsrichtung ausgerichtet vorliegen. Dies erhöht die Stabilität des Faserverbundmaterials in genau dieser Richtung. Aufgrund dessen wird das Faserverbundmaterial, das unidirektionale Fasern aufweist, vorteilhafterweise in Belastungsrichtung angeordnet, da somit die Zugfestigkeit der Fasern etwaigen Verformungen aufgrund der Druckänderung im Inneren der Speicherzellen bei deren Betrieb, am effizientesten entgegenwirken kann.

In einer weiteren vorteilhaften Ausführung weisen die Endplatten und/oder Zuganker des erfindungsgemäßen Energiespeichermoduls Befestigungselemente und/oder Bodenbefestigungselemente auf. Befestigungselemente dienen dazu die Endplatten mit dem Zuganker zu verbinden. Bodenbefestigungselemente dienen dazu ein Energiespeichermodul beispielsweise mit dem umgebenden Gehäuse des Energiespeichermoduls zu verbinden. Solche Befestigungselemente oder auch Bodenbefestigungselemente können beispielsweise Ösen, Füße, Rippen, Laschen, Falze, Nieten oder Nuten sein. Durch beispielsweise entsprechende Laschen oder Ösen an sowohl einer Endplatte als auch an einem Zuganker oder Zuganker untereinander kann beispielsweise durch Einbringung eines Stiftes oder einer Schraube durch beide Laschen, oder Ösen auf einfache Art und Weise eine dauerhafte, stabile Verbindung zwischen Zuganker und Endplatte bereitgestellt werden. Solche Befestigungselemente sind vorzugsweise integraler Bestandteil des zu befestigenden Bauelements (z.B. Zuganker oder Endplatte), was insbesondere bei Verwendung von Kunststoffmaterialien bzw. Faserverbundmaterialien als Zuganker und/oder Endplatte ermöglicht wird. Integrierte Anspritzbefestigungselemente erhöhen den Verbund mit den umgebenden Bauteilen und sichern somit eine ausreichende Stabilität des Energiespeichermoduls in seiner Umgebung, selbst bei einwirkenden mechanischen Kräften, wie sie durch bestimmungsgemäßen Gebrauch des Energiespeichermoduls übertragen werden. Die Befestigungselemente bzw. Bodenbefestigungselemente können in beliebiger Form, beispielsweise als Öse, Rippen, Clips, Laschen oder Bolzen, und in beliebiger Anzahl ausgebildet werden. Vorzugsweise sind zumindest Bodenbefestigungselemente mindestens an jeder bodenseitigen Ecke des erfindungsgemäßen Energiespeichermoduls vorgesehen. Befestigungselemente bzw. Bodenbefestigungselemente lassen sich leicht mittels gängiger Spritzgußverfahren in das entsprechende Bauteil integrieren, wodurch die Fertigungskosten des Energiespeichermoduls und der technische Aufwand dessen Produktion und damit auch seine Kosten erheblich gesenkt werden. Dies ist nicht zuletzt darauf zurückzuführen, dass etwaige Nachbearbeitungsschritte, wie beispielsweise das separate Vorsehen von Befestigungselementen, entfallen. Ferner lässt sich die Herstellung des erfindungsgemäßen Energiespeichermoduls somit leichter und umfassender automatisieren, was das Auftreten von Fehlern bei der Ausführung verhindert und ferner ebenfalls zur Senkung der Produktionskosten und zur Steigerung der Produktion beiträgt.

Gemäß einer weiteren vorteilhaften Ausführung sind die Endplatten mit dem Zuganker oder aber mehrere, also mindestens zwei Zuganker miteinander verschraubt und/oder gestaucht und/oder verschweißt und/oder mittels mindestens eines Clips, und/oder mittels einer Umformung, verbunden, wobei ein Zuganker beispielsweise eine Endplatte hintergreift und/oder umgreift. Geeignete Verschraubungsmittel sind aus dem Stand der Technik bekannt. Gut bewährt haben sich Flügelschrauben, wobei die Flügelschraube durch eine beispielsweise an der Endplatte oder aber an einem ersten Zuganker vorgesehene, vorteilhafterweise integrierte, Öse sowie durch eine an einem weiteren Zuganker vorgesehene, vorteilhafterweise integrierte, Öse geführt und auf der Endseite mittels einer Flügelmutter verschraubt wird, was den fertigungstechnischen Aufwand deutlich reduziert, da ein Anbringen von Befestigungsmitteln zumindest teilweise entfällt. Eine solche Schraubverbindung sorgt für eine beständige Verbindung der Bauteile. Die Zuganker können ferner auch eine Stauchung um mindestens einen Teil der Endplatte oder eines ersten Zugankers, meist um mindestens eine seitliche Kante derselben, aufweisen, und auf diese Art und Weise mit ihr verbunden werden. Stauchungen haben dabei den Vorteil keine zusätzlichen Befestigungselemente zu erfordern. Die Stauchung eines Zugankers kann bequem nach Anordnung der Zellen und umgebenden Endplatten erfolgen und individuell, also in Abhängigkeit der Größe des Zellenstapels, ausgeführt werden. Ferner können Zuganker untereinander oder auch mit Endplatten verschweißt werden. Mögliche Schweißverfahren umfassen dabei Ultraschallschweißen, Laserschweißen und Reibungsschweißen. Das geeignete Schweißverfahren wird in Abstimmung mit den verwendeten Materialien ausgewählt. Eine Schweißverbindung sichert dabei eine dauerhafte Verbindung der Endplatte mit dem Zuganker oder der untereinander zu verbindenden Zuganker. In einer weiteren Ausgestaltung können die Zuganker untereinander oder die Zuganker auch mit den Endplatten mittels eines Clips verbunden sein. Clipelemente weisen dabei den Vorteil auf, dass sie an beliebigen Stellen im Nachhinein, also nach Anordnung des Zellenstapels, und somit individuell, angebracht werden können. Clipverbindungen sind dabei unabhängig von der Größe und Form des Zellenstapels, was den fertigungstechnischen Aufwand reduziert und eine gewisse Variabilität des Fertigungsprozesses erlaubt. Umfasst sowohl der Zuganker als auch die damit zu verbindende Endplatte ein thermoplastisches Material, so können beide Bauelemente oder auch mehrere Zuganker untereinander auch durch Erwärmen der jeweils zu verbindenden Bereiche bis zur Erweichung des thermoplastischen Materials und anschließendes Aneinanderdrücken oder Pressen miteinander verbunden werden. Das Erwärmen kann dabei beispielsweise mittels Spiegelschweißen, unter Verwendung einer erwärmbaren Aluminiumplatte, ausgeführt werden. Eine solche Kunststoffverbindung ist einfach ohne großen technischen Aufwand herstellbar und stellt nach dem Aushärten des Materials, also dem Abkühlen der verbundenen Materialien, eine ausreichend stabile Verbindung der Bauteile bereit. Aufgrund des reduzierten Fertigungsaufwandes, auch durch den Verzicht auf separate oder integrierte Befestigungsmittel, werden die Herstellkosten und des technischen und logistischen Aufwandes der Herstellung des erfindungsgemäßen Energiespeichermoduls um ein weiteres Mal gesenkt. Dieses Verfahren eignet sich daher besonders gut zur Herstellung von kostengünstigen Energiespeichermodulen für Kraftfahrzeuge in Leichtbauweise. Die jeweiligen Befestigungsmechanismen können auch untereinander kombiniert werden, so kann zum Beispiel zusätzlich zu einer Schweißverbindung eine Schraub- und/oder Klemmverbindung (Clipverbindung) vorgesehen sein, was die Stabilität der Verankerung der Zuganker untereinander oder der Zuganker mit der Endplatte deutlich erhöht.

Darüber hinaus ist erfindungsgemäß ein Verfahren zur Herstellung eines, wie oben beschriebenen, Energiespeichermoduls vorgesehen. Das Verfahren umfasst das Bereitstellen einer Endplatte aus mindestens drei Schichten und eines Zugankers wobei alle Schichten der Endplatte sowie der Zuganker aus einem Faserverbundmaterial bestelen, ggf. Vorsehen von Befestigungselementen und/oder Bodenbefestigungselementen an mindestens einer Endplatte und/oder einem Zuganker, das Anbringen mindestens jeweils einer Endplatte an der jeweiligen Stirnseite der endständigen Speicherzellen der in Reihe gestapelten, insbesondere prismatischen Speicherzellen und das Verspannen der Endplatten, vorzugsweise über mindestens einen Zuganker.

Wird das Verspannen der Endplatten nicht erfindungsgemäß mittels einer Wickelung ausgeführt, so werden vorteilhafterweise die nachfolgenden Verfahrensschritte ausgeführt: Anbringen eines Zusatzelements, das das Zellenmodul aus gestapelten Speicherzellen und Endplatten zumindest teilweise umgibt, Drehen des mit dem Zusatzelement versehenen Zellenmoduls um ein durch ein Harzbad laufendes Faserband und ggf. Härten des Energiespeichermoduls. Ein Härteschritt ist insbesondere bei der Verwendung duromerer Materialien vorgesehen und kann mittels gängiger Verfahren, wie z.B. durch Lichthärtung oder Wärmehärtung, erfolgen. Sind beispielsweise an den Endplatten Bodenbefestigungselemente vorgesehen, so werden sie bei der Wicklung ausgespart, so dass sie nach wie vor ihre Funktion ausüben können.

Alternativ dazu kann nicht erfindungsgemäß die Wickelung aber auch so erfolgen, dass bereits in Form gebrachte, also gewickelte und mit einem Matrixmaterial versehene, Fasern gedehnt werden, beispielsweise durch Erwärmen und Dehnen der Wickelung bei Verwendung eines thermoplastischen Matrixmaterials und im Anschluss daran die Wickelung dem Zellenmodul übergestülpt wird, wo sie dann durch Abkühlung in ihrer Form erstarrt.

Die im Rahmen des erfindungsgemäßen Energiespeichermoduls beschriebenen vorteilhaften Ausgestaltungen finden entsprechend vorteilhafte Anwendung im Rahmen des erfindungsgemäßen Verfahrens zur Herstellung des Energiespeichermoduls.

Somit wird ein Verfahren zur Herstellung eines Energiespeichermoduls bereitgestellt, das einfach umzusetzen und variabel in seiner Anwendung ist. Das erfindungsgemäße Verfahren erfordert lediglich einen geringen fertigungstechnischen Aufwand und trägt damit zur Senkung der Herstellkosten des Energiespeichermoduls und damit der Gesamtkosten desselben, bei. Durch das Vorsehen integrierter Befestigungselemente und/oder integrierter Bodenbefestigungselemente entfallen zum Großteil Nachbearbeitungsschritte, was den fertigungstechnischen Aufwand und damit wiederum die Kosten für die Herstellung des erfindungsgemäßen Energiespeichermoduls reduziert. Das erfindungsgemäße Energiespeichermodul weist neben einer hohen Qualität, mechanischen, chemischen und physikalischen Stabilität und effizienten Wirkungsweise, ein geringeres Eigengewicht als Strangpressprofile umfassende Energiespeichermodule auf, wodurch das Gesamtgewicht eines Kraftfahrzeugs, das das erfindungsgemäße Energiespeichermodul enthält, reduziert wird, so dass es sich insbesondere für Kraftfahrzeuge in der Leichtbauweise eignet. Aufgrund der reduzierten Fertigungskosten sind auch die Kosten für das Energiespeichermodul niedrig.

Die Erfindung wird nachfolgend anhand der Zeichnung näher erläutert. Dabei zeigt:
- Figur 1: eine Endplatte des Energiespeichermoduls gemäß einer Ausführungsform, die eine Schichtstruktur aus mindestens drei Schichten aufweist
- Figur 2: einen Zuganker, der mittels einer Schweißverbindung mit einer drei-schichtigen Endplatte verbunden ist
- Figur 3: einen am Eck um eine drei-schichtige Endplatte gestauchten Zuganker, der zusätzlich mit der Endplatte verschraubt ist
- Figur 4: eine drei-schichtige Endplatte, die mittels eines Clips mit einem Zuganker aus Faserverbundmaterial mit einer angespritzten Lasche verbunden ist
- Figur 5: zwei über eine Schweißverbindung verbundene Zuganker
- Figur 6: zwei mittels eines Metallinserts und einer angespritzten Verrastung verbundene Zuganker
- Figur 7: eine Vergrößerung des Verankerungsmechanismus aus Figur 6
- Figur 8: zwei mittels einer Stauchung verbundene Zuganker
- Figur 9: ein Energiespeichermodul gemäß einer Ausführung, umfassend mehrer in Reihe angeordnete prismatische Speicherzellen und zwei Endplatten (= Zellenmodul), wobei das Zellenmodul über zwei Zuganker verspannt ist
- Figur 10: ein Energiespeichermodul gemäß einer weiteren Ausführung, umfassend mehrere in einer Reihe angeordnete prismatische Speicherzellen und zwei Endplatten (= Zellenmodul), wobei das Zellenmodul über einen Zuganker und über ein als Zuganker ausgebildetes Wärmeableitblech verspannt ist
- Figur 11: ein Energiespeichermodul gemäß einer weiteren Ausführung, umfassend in einer Reihe angeordnete Speicherzellen und zwei drei-schichtige Endplatten, wobei die Verspannung mittels einer Wickelung erfolgt ist und
- Figur 12: eine fünf-schlchtige Endplatte gemäß einer weiteren Ausführungsform.

Im Folgenden wird die Erfindung anhand der Figuren näher erläutert.

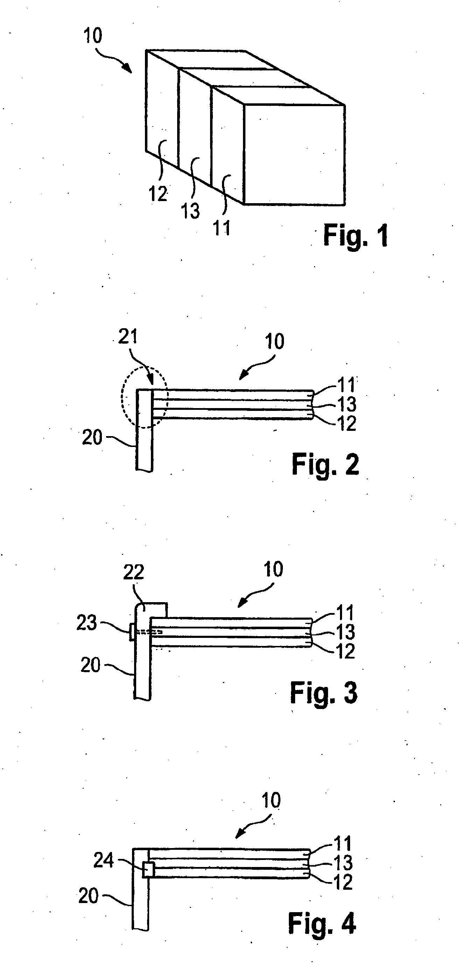

In Figur 1 ist eine Endplatte 10 in Sandwichbauweise gezeigt, die eine erste äußere Schicht 11 und eine zweite äußere Schicht 12 und eine dazwischen liegende innere Schicht 13, aufweist.

Eine beispielhafte nicht erfindungsgemäße Drei-Schicht-Struktur umfasst eine erste äußere Metallschicht 11 und eine zweite äußere Metallschicht 12, die eine weitere, innere Metallschicht 13 umgeben, wobei die Metallschichten 11, 12, 13 vorzugsweise Metallplatten oder Metallbleche sind, und wobei die innere Metallschicht 13 eine gewisse Struktur zur Aufnahme der Verformung durch die Erhöhung des Gasinnendrucks während des Betriebs der im Inneren des Energiespeichermoduls angeordneten elektrochemischen Zellen, aufweist.

Eine solche Struktur kann durch einfache Umformung, beispielsweise durch Formen einer Wellenstruktur, ausgebildet sein. Die Metallschichten 11, 12, 13 können dabei in beliebiger Größe aus einem Metallgrundmaterial, wie beispielsweise Stahlblech oder Aluminiumblech, ausgestanzt werden. Alternativ oder additiv kann es sich bei mindestens der inneren Metallschicht 13 auch um eine Metallplatte handeln, auf die mindestens eine Prägung aufgebracht ist. Die durch die Umformung oder Prägung erzeugte Struktur der Metallplatte ist geeignet, die durch Betrieb der Zellen im Inneren des Energiespeichermoduls während seiner Lebensdauer entstehenden Druckkräfte, aufzunehmen und abzuleiten, um auf diese Weise etwaigen Verformungen entgegenzuwirken. Somit werden irreversible Schädigungen am Energiespeichermodul verhindert und es kann eine ausreichende Stabilität des Energiespeichermoduls während seiner gesamten Lebensdauer gewährleistet werden. Im Gegensatz zu Strangpressprofilen sind die hier beschriebenen Drei-Schicht-Strukturen von geringerem Eigengewicht und reduzieren somit das Gesamtgewicht des Energiespeichermoduls und damit folglich auch dasjenige des Kraftfahrzeugs, in das das erfindungsgemäße Energiespeichermodul eingebaut ist. Ferner ist der fertigungstechnische Aufwand zur Herstellung einer solchen Drei-Schicht-Struktur geringer als ein solcher eines Strangpressprofils, so dass sich eine deutliche Kostenreduktion der Herstellung der Endplatte des erfindungsgemäßen Energiespeichermoduls ergibt.

Eine weitere nicht erfindungsgemäße beispielhafte Drei-Schicht-Struktur umfasst eine erste äußere Metallschicht 11 und zweite äußere Metallschicht 12, die eine weitere, innere Schicht 13 umgeben, wobei die innere Schicht 13 eine Duromer-enthaltende Schicht oder eine Thermoplast-enthaltende Schicht ist. Duromere Schichten umfassen dabei vorzugsweise wabenförmige oder wellenförmige Schichtstrukturen, wobei die thermoplastische Schicht vorzugsweise ein Tiefziehprofil aufweist. Auch hier ist die innere Schicht 13 wiederum ausgebildet, um die Druckänderung aus dem Inneren der Speicherzellen, während deren Betrieb, aufzunehmen und abzuleiten, um einer lokalen Verformung des Energiespeichermoduls entgegenzuwirken. Die jeweiligen Schichten können in bekannter Weise, z.B. mechanisch mittels Klemmelementen oder Verschraubungen oder chemisch, z.B. mittels eines Klebers oder physikalisch, z.B. durch Laminieren, miteinander verbunden werden, um die Drei-Schicht-Struktur in ihrer Ausgangsform zu fixieren. Alternativ zu dieser Schichtstruktur können auch die beiden äußeren Schichten 11, 12 aus einer Kunststoffschicht bestehen, wobei die von der ersten äußeren Schicht 11 und der zweiten äußeren Schicht 12 umgebene innere Schicht 13 eine Metallschicht, beispielsweise eine strukturierte, also geformte und/oder geprägte Metallschicht, darstellt. Auch eine solche Struktur weist die erforderlichen Stabilitäten auf, um etwaigen Verformungen entgegenzuwirken.

Eine weitere nicht erfindungsgemäße beispielhafte Drei-Schicht-Struktur umfasst eine erste äußere Kunststoffschicht 11 und eine zweite äußere Kunststoffschicht 12, die eine weitere, innere Kunststoffschicht 13 umgeben, wobei die Kunststoffschichten 11, 12, 13 duromere und/oder thermoplastische Schichten sein können, und wobei mindestens die innere Schicht 13, wie oben beschrieben, eine gewisse Struktur zur Aufnahme der Druckänderung aus dem Inneren der Speicherzellen, aufweist. Die Verbindung dieser Schichten kann z.B. durch Verkleben oder Laminieren derselben erfolgen. Im Falle der Verwendung von ausschließlich thermoplastischen Materialien kann eine solche Verbindung beispielsweise einfach durch Erwärmen an vorgesehenen Stellen der zu verbindenden Schichten bis zum Erweichungspunkt des thermoplastischen Materials und anschließendes Aneinanderdrücken oder Pressen unter Abkühlung der Materials, erfolgen. Vorzugsweise wird das Erwärmen mittels Spiegelschweißen ausgeführt, wobei zwischen zwei zu verbindende thermoplastische Schichten eine beheizbare Aluminiumplatte eingebracht wird, von der aus sich die Wärme auf die umgebenden thermoplastischen Schichten ausbreitet, die sodann erweichen und nach Entfernen der Aluminiumplatte in herkömmlicher Weise, beispielsweise durch Verpressen oder Aneinanderdrücken verbunden werden können. Das Spiegelschweißen schafft eine besonders innige, stabile und gleichmäßige Verbindung zwischen den thermoplastischen Schichten.

Bei Verwendung von thermoplastischen oder duroplastischen Materialien mindestens auf der den Speicherzellen zugewandten Schicht, ergibt sich ein weiter Vorteil: hier kann, aufgrund der isolierenden Eigenschaften der Kunststoffmaterialien, zumindest teilweise auf ein elektrisch isolierendes Material zur Unterbindung von unerwünschten Kopplungen an dieser Stelle verzichtet werden, was sowohl fertigungstechnisch als auch kostenmäßig gesehen weitere Einsparungen mit sich bringt.

Eine besonders bevorzugte Drei-Schicht-Struktur einer Endplatte des erfindungsgemäßen Energiespeichermoduls ist eine solche, bei der eine erste äußere Schicht 11 und eine zweite äußere Schicht 12 eine innere Schicht 13 umgeben, wobei mindestens eine der Schichten und weiter vorzugsweise alle drei Schichten aus einem Faserverbundmaterial, und insbesondere einem Faserverbundmaterial, umfassend eine thermoplastische Matrix und Glasfasern, bestehen. Eine solche Struktur zeichnet sich durch eine hervorragende Druckstabilität aus, ist kostengünstig und dabei sehr einfach zu verarbeiten. Zudem weist ein solches Material isolierende Eigenschaften auf, so dass zumindest teilweise auf das Anbringen von Isolierschichten in dem Energiespeichermodul verzichtet werden kann.

Das erfindungsgemäße Energiespeichermodul, umfassend eine wie vorstehend beschriebene, mindestens dreischichtige Struktur, zeichnet sich somit durch ein, gegenüber herkömmlichen Strangpressprofilen, deutlich reduziertes Eigengewicht aus und ist ferner ohne großen technischen Aufwand produzierbar. Dies hält den Fertigungsaufwand und damit die Kosten des erfindungsgemäßen Energiespeichermoduls gering.

Figur 2 zeigt einen Zuganker 20, der mittels einer Schweißverbindung 21 mit einer dreischichtigen Endplatte 10 verbunden ist. Dieses Verbindungsverfahren ist insbesondere dann geeignet, wenn mindestens eine Schicht 11, 12, 13 der Endplatte 10, sowie auch der Zuganker, aus einem schweißbaren Material, also aus insbesondere Aluminium, besteht, da somit eine dauerhaft stabile Verbindung erzeugt wird.

Figur 3 zeigt einen am Eck 22 um eine dreischichtige Endplatte 10 gestauchten Zuganker 20, der zusätzlich mit der Endplatte 10 mittels einer Schraubverbindung 23 verbunden wurde.

Figur 4 zeigt eine dreischichtige Endplatte 10, die mittels eines Clips 24 mit einem Zuganker 20 aus Faserverbundmaterial mit einer angespritzten Lasche (ist nicht gezeigt) verbunden ist.

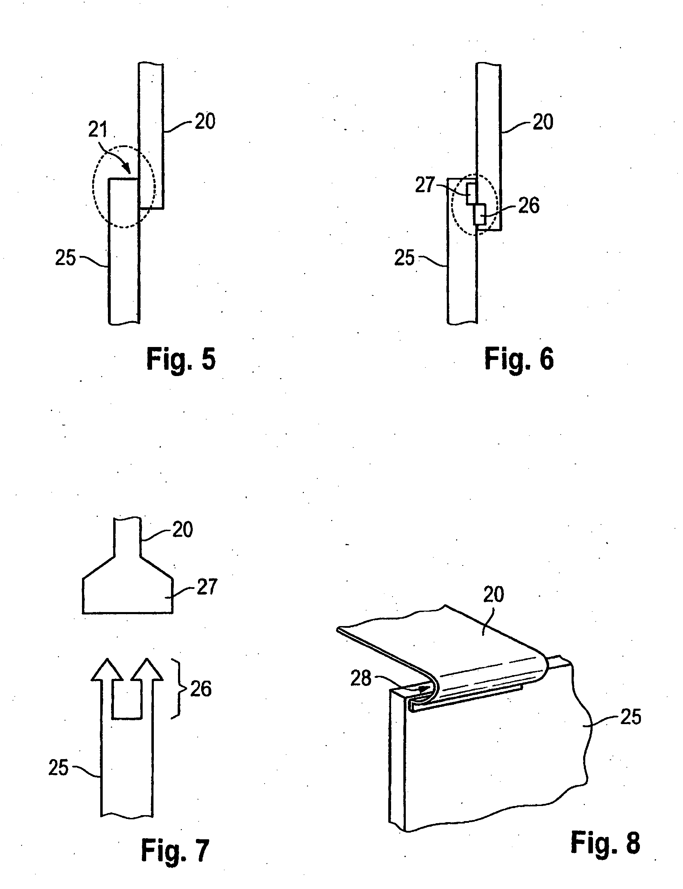

Figur 5 zeigt zwei über eine Schweißverbindung 21 verbundene Zuganker 20, 25. Dieser Verbindungsmechanismus eignet sich insbesondere für Zuganker 20, 25 aus metallischen Materialien, wie beispielsweise Stahl oder Aluminium.

Figur 6 zeigt zwei mittels eines Metallinserts 26 und einer angespritzten Verrastung 27 verbundene Zuganker 20, 25, wobei der Verankerungsmechanismus aus Figur 6 in Figur 7 vergrößert dargestellt ist.

Figur 8 zeigt zwei mittels einer Stauchung 28 verbundene Zuganker 20, 25.

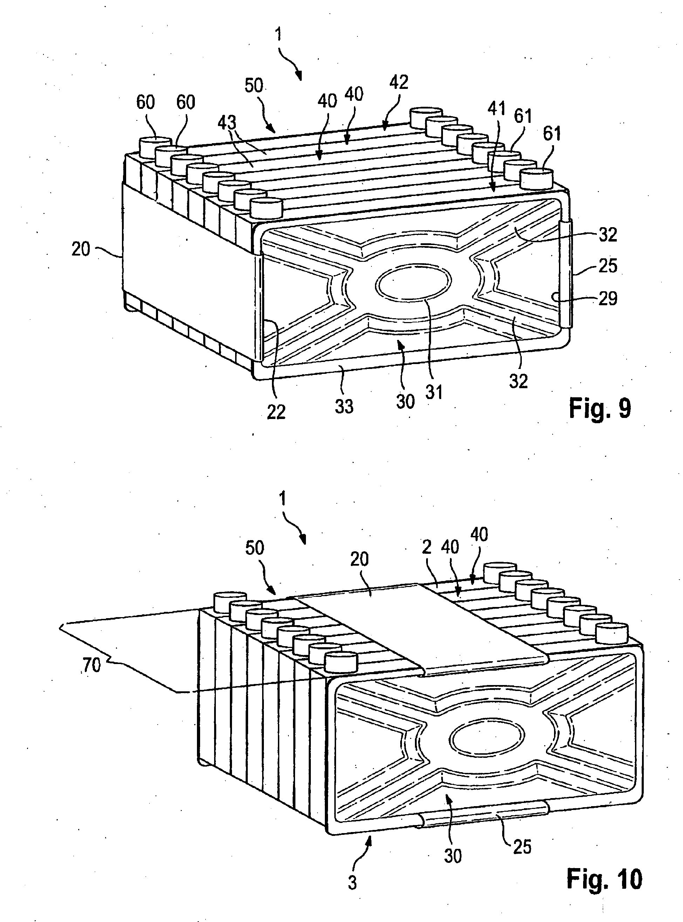

Figur 9 zeigt ein Energiespeichermodul 1, das mit Speicherzellen 40 bestückt ist, und an den jeweiligen Stirnseiten (nicht gezeigt) der endständigen Speicherzellen 41, 42 je eine Endplatte 30 (nur diejenige Endplatte 30 der Vorderseite der Reihe der Speicherzellen 50 ist gezeigt) aufweist, die als Stanzbiegeplatte 30 ausgebildet ist. Die Stanzbiegeplatte 30 weist in ihrer Flächenmitte eine ovale Prägung 31 auf, von der aus in jede Ecke der Stanzbiegeplatte 30 eine längliche Prägung 32 verläuft. Diese Prägungen 31, 32 sind zur Außenseite des Energiespeichermoduls 1 hin ausgebeult.

Die Speicherzelle 40 besteht typischerweise aus einer oder mehreren einzelnen elektrochemischen Zellen, welche in der hier gewählten Darstellung im Inneren der Speicherzelle 40 im Verborgenen liegen. Auf einer Vorderseite 43 weisen die Speicherzellen 40 ein Anschlussterminal erster Polarität 60 und ein Anschlussterminal zweiter Polarität 61 auf. Auf der in dieser Figur nicht dargestellten Rückseite der Speicherzellen 40 sind keine Anschlussterminals vorgesehen. Eines der Anschlussterminals 60, 61, typischerweise der PlusPol der Speicherzelle 40, kann elektrisch mit einem Gehäuse (nicht gezeigt) der Speicherzelle 40 verbunden sein.

Da in dem erfindungsgemäßen Energiespeichermodul 1 mehrere der Speicherzellen 40 zumindest in einer Reihe 50 gestapelt, hintereinander angeordnet werden, werden insbesondere bei Verwendung eines elektrisch leitenden Materials für den Zuganker 20 zumindest gegenüberliegende Hauptflächen (nicht gezeigt) mit einem elektrisch isolierenden Material versehen. Dieses kann eine Klebefolie sein, die auf die Hauptflächen aufgebracht ist. Alternativ kann auf die Hauptflächen auch ein elektrisch isolierender Kleber aufgebracht werden. Ebenso wäre die Verwendung eines Schrumpfschlauchs, der auf die mit Kleber versehenen Hauptflächen aufgebracht wird, denkbar.

Die Verspannung der zu einer Reihe 50 gestapelten Speicherzellen 40 erfolgt im Ausführungsbeispiel unter Verwendung von Endplatten 30 und Zugankern 20, 25, wobei die Zuganker 20, 25 aus einem Faserverbundmaterial bestehen, so dass auf ein Isolationsmaterial verzichtet werden kann. Die Zuganker 20, 25 sind dabei auf gegenüberliegenden Seiten entlang des Zellenstapels parallel angeordnet und mit den Endplatten 30 mittels einer Umformung 29 verbunden. Dadurch umgreift der Zuganker 20, 25 den Rand 33 der Endplatte 30, also eine seitliche Kante der Endplatte. Durch die Ausgestaltung der Endplatten 30 in Form einer geprägten Stanzbiegeplatte 30, sowie durch mit den Endplatten 30 durch eine Umformung 29 verbundenen Zugankern 20, 25 ist eine gleichmäßige Ausdehnung des Energiespeichermoduls 1 parallel zur Kraftrichtung der Verspannung (d.h. in Erstreckungsrichtung der Zuganker 20, 25) sichergestellt, wenn sich die Speicherzellen 40 in der Speicherzellen-Reihe 50 aufgrund von Gasdruckänderungen, welche beim Betrieb der Speicherzellen 40 auftreten, verformen. Der Vollständigkeit halber sei angeführt, dass die Anzahl an Speicherzellen und deren Anordnung in einer oder mehreren Reihen, beliebig ist.

Die Umformung 29 als Verbindung zwischen den Zugankern 20, 25 und der Endplatte 30 stellt ein einfaches, sicheres und etabliertes Verbindungsverfahren im Bereich der Automobiltechnik dar. Prinzipiell könnte die Herstellung der mechanischen Verbindung aber auch auf alternative Weise erfolgen, beispielsweise durch Verschweißen, Verschrauben oder jede beliebige andere form- und/oder kraftschlüssige Verbindung.

Figur 10 zeigt ein Energiespeichermodul 1 gemäß einer weiteren Ausführung, umfassend mehrere in einer Reihe 50 angeordnete prismatische Speicherzellen 40 und zwei Endplatten 30, die zusammen ein Zellenmodul 70 formen, wobei das Zellenmodul 70 über einen Zuganker 20 und über ein als Zuganker 25 ausgebildetes Wärmeableitblech verspannt ist. Die Ausbildung eines Zugankers 25 als Wärmeableitblech macht die zusätzliche Anbringung eines Wärmeableitblechs vorzugsweise an der Unterseite 2 des Energiespeichermoduls 1, überflüssig, was eine deutliche Kostenersparnis und Vereinfachung des Herstellungsverfahrens, sowie eine damit verbunden Senkung der Herstellungskosten des erfindungsgemäßen Energiespeichermoduls 1 mit sich bringt. Vorzugsweise ist der Zuganker 20 an der dem als Zuganker 25 ausgebildeten Wärmeableitblech gegenüberliegenden Seite 3 der Endplatte 30, also deren Oberseite, ausgebildet. Dies erhöht die Stabilität des Energiespeichermoduls deutlich.

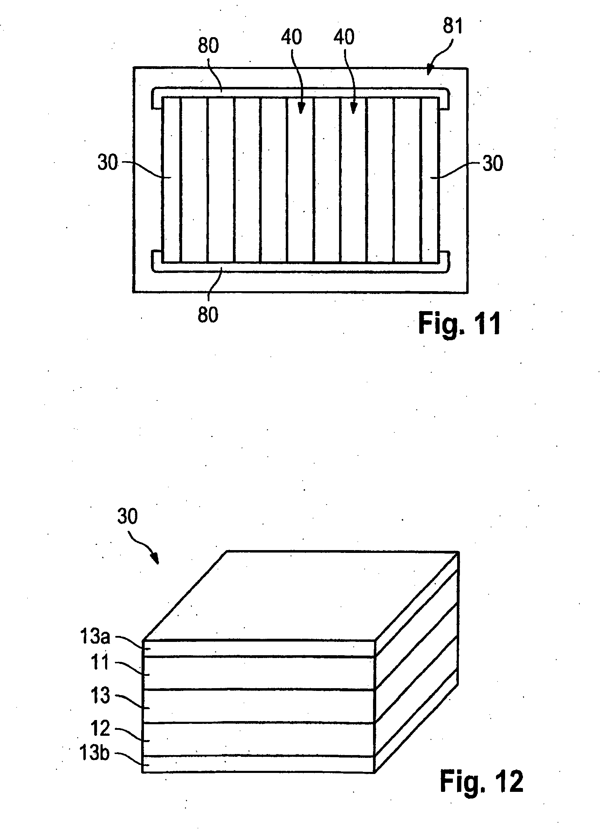

Figur 11 zeigt eine Speicherzellenanordnung aus aneinandergereihten Speicherzellen 40, die von zwei Endplatten 30 mit Drei-Schicht-Struktur (ist nicht gezeigt) umgeben sind. Diese Speicherzellenanordnung ist an ihrer Ober- und Unterseite von je einem Zusatzelement 80 umgeben, das die Speicherzellen 40 samt Endplatten 30 in ihrer Form stabilisiert, bevor es mit Wickelungen 81 aus mit Matrixmaterial getränkten Fasern umgeben und gehärtet wird. Diese Wickelung stellt einen zur Verwendung von Zugankern alternativen Verspannmechanismus dar, der ebenfalls eine ausreichende Stabilität des Energiespeichermoduls bereitstellt, so dass das erfindungsgemäße Energiespeichermodul etwaigen Verformungen aufgrund von Druckerhöhung in den Speicherzellen 40, effektiv entgegenwirken kann.

Figur 12 zeigt eine fünf-schichtige Endplatte 30 gemäß einer weiteren Ausführungsform. Hier wird die innere Schicht 13 durch ein Kurzfasem enthaltendes thermoplastisches Spritzgußmaterial gebildet, das vorzugsweise eine wellenartige Struktur (ist nicht gezeigt) zur Erhöhung der Stabilität der Endplatte 30 aufweisen kann. Die äußeren Schichten 11, 12 sind Metallbleche, vorzugsweise aus Aluminium. Die weiteren außen liegende dritte äußere Schicht 13a und vierte äußere Schicht 13b sind aus demselben thermoplastischen Material gebildet, das auch die innere Schicht bildet. Eine solche fünf-schichtige Struktur wird beispielsweise wiefolgt erhalten: In ein Spritzgußwerkzeug werden voneinander beabstandet zwei Metallbleche eingelegt, die Perforationen (sind nicht gezeigt) aufweisen. Zwischen diese Metallbleche wird eine innere Schicht 13 aus einem vorzugsweise thermoplastischen Material, vorzugsweise einem Spritzgußmaterial, das insbesondere Kurzfasern enthält, eingebracht. Sodann wird das Werkzeug erwärmt, wodurch das thermoplastische Matrixmaterial der inneren Schicht 13 aufweicht. Zudem wird weiteres insbesondere thermoplastisches Material, vorzugsweise dasselbe, das auch für die Herstellung der inneren Schicht 13 verwendet wurde, in das Werkzeug gefüllt. Dieses umgibt und durchdringt teilweise die innere Schicht 13 und bindet somit auch die äußeren Schichten 11 und 12 an die innere Schicht 13. Ferner tritt das Material auch durch die Perforationen an die jeweilige Oberfläche der äußeren Schichten 11, 12 und umfließt und umhüllt diese von der Außenseite unter Bildung der dritten und vierten äußeren Schicht 13a und 13b. Somit entsteht eine fünf-schichtige Struktur. Diese fünf-schichtige Struktur weist einen kompakten Verbund der Schichten 11, 12, 13, 13a und 13b auf, so dass auf zusätzliche Befestigungselemente zwischen den Schichten verzichtet werden kann. Diese Fünf-Schicht-Struktur zeichnet sich gegenüber herkömmlichen Strangpressprofilen nicht nur durch ein reduziertes Gewicht, sondern auch durch eine erhöhte Stabilität gegenüber Verformung, sowie eine zusätzliche elektrische Isolierung aus, die durch die dritte und vierte äußere Schicht 13a und 13b bereitgestellt wird.

### Bezugszeichenliste

- 1: Energiespeichermodul
- 2: Oberseite des Energiespeichermoduls
- 3: Unterseite des Energiespeichermoduls
- 10: Drei-Schicht-Struktur
- 11: erste äußere Schicht
- 12: zweite äußere Schicht
- 13: innere Schicht
- 13a: dritte äußere Schicht
- 13b: vierte äußere Schicht
- 20: Zuganker
- 21: Schweißverbindung
- 22: Eck
- 23: Schraubverbindung
- 24: Clip
- 25: Zuganker
- 26: Metallinsert
- 27: Angespritzte Verrasterung
- 28: Stauchung
- 29: Umformung
- 30: Endplatte
- 31: ovale Prägung
- 32: längliche Prägung
- 33: Rand der Endplatte
- 40: Speicherzellen
- 41: endständige Speicherzelle
- 42: endständige Speicherzelle
- 43: Vorderseite
- 50: Speicherzellen-Reihe
- 60: Anschlussterminal erster Priorität
- 61: Anschlussterminal zweiter Priorität
- 70: Zellenmodul
- 80: Zusatzelement
- 81: Wickelung

## Patentansprüche

1. Energiespeichermodul für eine Vorrichtung zur Spannungsversorgung, insbesondere eines Kraftfahrzeugs, umfassend mehrere, insbesondere prismatische Speicherzellen (40), die mindestens in einer Reihe (50) gestapelt, hintereinander angeordnet und zwischen mindestens zwei Endplatten (30) über mindestens einen Zuganker (20, 25) verspannt sind, wobei zumindest eine der Endplatten (30) eine Schichtstruktur (10) aus mindestens drei Schichten (11, 12, 13) aufweist, **dadurch gekennzeichnet, dass** alle Schichten (11, 12, 13) der Endplatte (30) und der Zuganker (20, 25) aus einem Faserverbundmaterial bestehen.

2. Energiespeichermodul nach Anspruch 1, **dadurch gekennzeichnet, dass** beide Endplatten (30) eine Schichtstruktur (10) aus mindestens drei Schichten (11, 12, 13) aufweisen.

3. Energiespeichermodul nach einem der vorhergehenden Ansprüche, **dadurch gekennzeichnet, dass** das Faserverbundmaterial eine thermoplastische Matrix mit Fasern oder eine duromere Matrix mit Fasern, insbesondere eine thermoplastische Matrix mit Fasern, umfasst.

4. Energiespeichermodul nach einem der vorhergehenden Ansprüche, **dadurch gekennzeichnet, dass** die Fasern ausgewählt sind aus Glasfasern, Kohlefasern, Mineralfasern, Pflanzenfasern, Keramikfasern, Stahlfasern oder Kunststofffasern, insbesondere aus Glasfasern.

5. Energiespeichermodul nach einem der vorhergehenden Ansprüche, **dadurch gekennzeichnet, dass** die Fasern unidirektionale Fasern sind.

6. Energiespeichermodul nach einem der vorhergehenden Ansprüche, **dadurch gekennzeichnet, dass** die Endplatten (30) und/oder der Zuganker (20, 25) mindestens ein Befestigungselement und/oder Bodenbefestigungselement aufweist.

7. Energiespeichermodul nach einem der vorhergehenden Ansprüche, **dadurch gekennzeichnet, dass** die Endplatten (30) mit dem Zuganker (20, 25) verschraubt und/oder gestaucht und/oder verschweißt und/oder mittels mindestens eines Clips (24), und/oder mittels einer Umformung, verbunden sind.

8. Verfahren zur Herstellung eines Energiespeichermoduls für eine Vorrichtung zur Spannungsversorgung, insbesondere eines Kraftfahrzeugs, umfassend mehrere, insbesondere prismatische Speicherzellen (40), die zu mindestens in einer Reihe (50) gestapelt, hintereinander angeordnet sind, **gekennzeichnet durch** die folgenden Schritte:
- Bereitstellen einer Endplatte (30) aus mindestens drei Schichten und eines Zugankers (20, 25), wobei alle Schichten (11, 12, 13) der Endplatte (30) sowie der Zuganker (20, 25) aus einem Faserverbund-material bestehen
- ggf. Vorsehen von Befestigungselementen und/oder Bodenbefestigungselementen an mindestens einer Endplatte (30) und/oder einem Zuganker (20, 25)
- Anbringen mindestens jeweils einer Endplatte (30) an der jeweiligen Stirnseite der endständigen Speicherzellen der in Reihe (50) gestapelten, insbesondere prismatischen Speicherzellen (40) und
- Verspannen der Endplatten (30) über mindestens einen Zuganker (20, 25).

9. Verwendung eines Faserverbundmaterials zur Herstellung einer mindestens dreischichtigen Endplatte (30) und eines Zugankers (20, 25) für ein Energiespeichermodul (1) für eine Vorrichtung zur Spannungsversorgung.

## Claims

1. An energy storage module for a voltage supply device, especially in a motor vehicle, comprising a number of storage cells (40), especially prismatic ones, stacked in at least one row (50), disposed one behind the other and clamped between at least two end plates (30) by at least one tie rod (20, 25), wherein at least one end plate (30) has a layer structure (10) in at least three layers (11, 12, 13), **characterised in that** all the layers (11, 12, 13) of the end plate (30) and of the tie rod (20, 25) are made of a composite fibre material.

2. An energy storage module according to claim 1, **characterised in that** both end plates (30) have a layer structure (10) in at least three layers (11,12, 13).

3. An energy storage module according to any of the preceding claims, **characterised in that** the composite fibre material is a thermoplastic matrix comprising fibres or a thermosetting matrix comprising fibres, especially a thermoplastic matrix comprising fibres.

4. An energy storage module according to any of the preceding claims, **characterised in that** the fibres are selected from glass fibres, carbon fibres, mineral fibres, vegetable fibres, ceramic fibres, steel fibres or plastic fibres, especially glass fibres.

5. An energy storage module according to any of the preceding claims, **characterised in that** the fibres are unidirectional fibres.

6. An energy storage module according to any of the preceding claims, **characterised in that** the end plates (30) and/or the tie rod (20, 25) comprise at least one fastening element and/or floor fastening element.

7. An energy storage module according to any of the preceding claims, **characterised in that** the end plates (30) are screwed (20, 25) and/or upset and/or welded to the tie rod and/or are connected by at least one clip (24) and/or at least one change of shape.

8. A method of producing an energy storage module for a voltage supply device, especially in a motor vehicle, comprising a number of storage cells (40), especially prismatic, stacked in at least one row (50), and disposed one behind the other, **characterised by** the following steps:
- providing an end plate (30) with at least three layers and a tie rod (20, 25), wherein all the layers (11, 12, 13) in the end plate (30) and in the tie rod (20, 25) are made of a composite fibre material,
- if required, providing fastening elements and/or floor fastening elements on at least one end plate (30) and/or one tie rod (20, 25),
- attaching at least one end plate (30) in each case to the respective end face of the end storage cell in the line (50) of stacked, particularly prismatic, storage cells (40) and
- clamping the end plates with at least one tie rod (20, 25).

9. Use of a composite fibre material for producing an at least three-layer end plate (30) and a tie rod (20, 25) for an energy storage module (1) for a voltage supply device.

## Revendications

1. Module accumulateur d'énergie pour un dispositif d'alimentation en courant par exemple d'un véhicule comprenant plusieurs cellules accumulatrices (40) en particulier prismatiques qui sont positionnées les unes derrière les autres en étant rassemblées en au moins une rangée (50) et comprimées entre au moins deux plaques d'extrémité (30) par l'intermédiaire d'au moins un tirant d'ancrage (20, 25) au moins l'une des plaques d'extrémité (30) présentant une structure stratifiée (10) comportant au moins trois couches (11, 12, 13),
**caractérisé en ce que**
toutes les couches (11, 12, 13) de la plaque d'extrémité (30) et le tirant d'ancrage (20, 25) sont réalisés en un matériau composite à base de fibres.

2. Module accumulateur d'énergie conforme à la revendication 1,
**caractérisé en ce que**
les deux plaques d'extrémité (30) présentent une structure stratifiée (10) comprenant au moins trois couches (11, 12, 13).

3. Module accumulateur d'énergie conforme à l'une des revendications précédentes,
**caractérisé en ce que**
le matériau composite à base de fibres renferme une matrice thermo-plastique avec des fibres ou une matrice duromère avec des fibres, en particulier une matrice thermoplastique avec des fibres.

4. Module accumulateur d'énergie conforme à l'une des revendications précédentes,
**caractérisé en ce que**
les fibres sont choisies parmi les fibres de verre, les fibres de carbone, les fibres minérales, les fibres végétales, les fibres céramiques, les fibres d'acier ou les fibres synthétiques, et sont en particulier des fibres de verre.

5. Module accumulateur d'énergie conforme à l'une des revendications précédentes,
**caractérisé en ce que**
les fibres sont des fibres unidirectionnelles.

6. Module accumulateur d'énergie conforme à l'une des revendications précédentes,
**caractérisé en ce que**
les plaques d'extrémité (30) et/ou le tirant d'ancrage (20, 25) comporte(nt) au moins un élément de fixation et/ou un élément de fixation au sol.

7. Module accumulateur d'énergie conforme à l'une des revendications précédentes,
**caractérisé en ce que**
les plaques d'extrémité (30) sont vissées et/ou refoulées et/ou soudées sur le tirant d'ancrage (20, 25) et/ou reliées à ce tirant par au moins un clip (24) et/ou par déformation.

8. Procédé d'obtention d'un module accumulateur d'énergie pour un dispositif d'alimentation en courant en particulier d'un véhicule comprenant plusieurs cellules accumulatrices (40) en particulier prismatiques qui sont positionnées les unes derrière les autres, en étant rassemblées en au moins une rangée (50),
caractérisé en qu'il comprend les étapes consistant à :
- se procurer une plaque d'extrémité (30) constituée par au moins trois couches et un tirant d'ancrage (20, 25), toutes les couches (11, 12, 13) de la plaque d'extrémité (30) ainsi que le tirant d'ancrage (20, 25) étant réalisés en un matériau composite à base de fibres,
- le cas échant prévoir des éléments de fixation et/ou des éléments de fixation au sol sur au moins une plaque d'extrémité (30) et/ou un tirant d'ancrage (20, 25),
- positionner au moins une plaque d'extrémité respective (30) sur les faces frontales respectives des cellules accumulatrices de fin de chaine, des cellules accumulatrices (40) en particulier prismatiques rassemblées en rangées (50), et
- comprimer les plaques d'extrémité (30) par au moins un tirant d'ancrage (20, 25).

9. Utilisation d'un matériau composite à base de fibres pour l'obtention d'une plaque d'extrémité (30) constituée par au moins trois couches et un tirant d'ancrage (20, 25) pour un module accumulateur d'énergie (1) d'un dispositif d'alimentation en courant.
